# EUROPÄISCHE PATENTSCHRIFT

(11) **EP 3 536 479 B1**
(45) Veröffentlichungstag und Bekanntmachung des Hinweises auf die Patenterteilung: **29.09.2021**
(21) Anmeldenummer: 18210910.8
(22) Anmeldetag: 07.12.2018
(51) Int. Cl.: B29C 49/46, B29C 49/58, B29C 49/06, B29C 49/12, B29C 49/36, B29L 31/00

(54) **VORRICHTUNG UND VERFAHREN ZUM EXPANDIEREN UND GLEICHZEITIGEN BEFÜLLEN VON BEHÄLTNISSEN**
METHOD AND DEVICE FOR EXPANDING AND SIMULTANEOUSLY FILLING CONTAINERS
DISPOSITIF ET PROCÉDÉ D'EXPANSION ET DE REMPLISSAGE SIMULTANÉ DE RÉCIPIENTS

(30) Priorität: 07.03.2018 DE 102018105228
(43) Veröffentlichungstag der Anmeldung: 11.09.2019
(73) Patentinhaber: Krones AG, 93073 Neutraubling (DE)
(72) Erfinder: Kitzinger, Thomas, 93073 Neutraubling (DE); Hanesch, Cora, 93073 Neutraubling (DE); Vornehm, Andreas, 93073 Neutraubling (DE); Pense, Andreas, 93073 Neutraubling (DE); Finger, Dieter, 93073 Neutraubling (DE); Meier, Dominik, 93073 Neutraubling (DE); Voth, Klaus, 93073 Neutraubling (DE); Betz, Christian, 93073 Neutraubling (DE)
(74) Vertreter: Bittner, Bernhard

(56) Entgegenhaltungen:
- EP-A1- 2 987 619
- WO-A1-2017/090340
- US-A1- 2013 122 136

## Beschreibung

Die vorliegende Erfindung bezieht sich auf eine Vorrichtung und ein Verfahren zum Herstellen von Flüssigkeitsbehältnissen und insbesondere Getränkebehältnissen. Derartige Verfahren sind aus dem Stand der Technik seit Langem bekannt. Bei üblichen Verfahren werden erwärmte Kunststoffvorformlinge zunächst zu Kunststoffflaschen expandiert, was beispielsweise in Blasformmaschinen erfolgt. Diese so expandierten Behältnisse werden anschließend mit einem Füllgut, wie etwa einem Getränk befüllt.

Aus dem Stand der Technik sind solche Vorrichtungen bekannt:
Dokument WO 2017/090340 A1 zeigt ein Flüssigkeitsblasformverfahren zum Formen eines Behälters 60 aus einem Vorformling 2. In einem Füllschritt ist dabei eine erste Druckerzeugungsquelle 32 mit einer ersten Flüssigkeit L1 gefüllt und eine zweite Druckerzeugungsquelle 35 mit einer zweiten Flüssigkeit L2. Weiterhin wird in einem Formschritt der Vorformling 2 durch gleichzeitiges Betätigen der ersten Druckquelle 32 und der zweiten Druckquelle 35 flüssiggeblasen, wobei gleichzeitig die erste Flüssigkeit L1, die von der ersten Druckquelle 32 mit einem vorbestimmten Druck beaufschlagt wurde, und die zweite Flüssigkeit L2, die von der zweiten Druckquelle 35 mit einem vorbestimmten Druck beaufschlagt wurde, in den Vorformling 2 eingebracht wird.
Dokument EP 2 987 619 A1 zeigt eine Formfüllmaschine sowie ein Verfahren zur Herstellung eines Kunststoffbehälters und dessen Befüllung mit mindestens einem Füllprodukt. Das zumindest teilweise Herstellen des Kunststoffbehälters durch Beaufschlagen des Preforms erfolgt dabei mit einem Füllprodukt mit einer ersten Temperatur, wobei der Kunststoffbehälter innerhalb der Form zumindest teilweise mit einem Füllprodukt mit einer zweiten, niedrigeren Temperatur befüllt wird.

In jüngerer Zeit sind auch Vorrichtungen und Verfahren bekannt geworden, bei denen Kunststoffvorformlinge unmittelbar mit dem abzufüllenden Füllgut befüllt und dabei auch expandiert werden. Zu diesem Zweck ist es bekannt, dass mittels einer Druckerzeugungseinrichtung bzw. Druckbeaufschlagungseinrichtung, wie etwa einer Pumpe oder auch einem Kolben der Druck erzeugt wird, mit dem das flüssige Füllgut in den zu expandierenden Kunststoffvorformling eingefüllt wird. Zu diesem Zweck sind teilweise sehr große Leistungen für die Antriebe derartiger Kolben nötig. Teilweise ist es auch gewünscht, die Behältnisse nicht mit einem reinen Produkt, sondern mit einem Produktgemisch zu befüllen.

Derzeit wird zum Formen von Behältnissen mit einem flüssigen Medium, welches anschließend in dem Behältnis verbleibt, eine Formeinheit verwendet, welche sich grob aus zwei Baugruppen zusammensetzt. Diese Baugruppen werden einerseits durch einen Füllzylinder (im Folgenden auch Druckerzeugungseinheit) und andererseits durch einen Füllkopf (im Folgenden Einfülleinrichtung) definiert. Der Füllzylinder ist im Stand der Technik einfach wirkend ausgeführt und wird über eine Versorgungsleitung von einem zentralen Flüssigkeitsspeicher mit einem flüssigen Medium, insbesondere dem Füllgut versorgt. Die Zuleitung zwischen dem zentralen Flüssigkeitsspeicher und dem Füllzylinder kann im Stand der Technik durch eine Absperrvorrichtung abgesperrt werden.

Ist der Füllzylinder gefüllt, wird die Absperrvorrichtung geschlossen und der Durchfluss gesperrt. Bei einem Formprozess wird das flüssige Medium aus dem Füllzylinder in den Füllkopf gepresst.

Die Verbindung zwischen dem Füllzylinder und dem Füllkopf ist dabei mindestens mit einem Kanal ausgeführt, wobei im Stand der Technik diese Kanäle nicht absperrbar sind. Ein ständiger Durchfluss von dem Füllzylinder zu dem Füllkopf ist zu jeder Zeit möglich.

Der Füllkopf setzt vor dem Formprozess auf den Kunststoffvorformling auf und dichtet insbesondere auch die Schnittstelle zu dem Kunststoffvorformling ab. Der Füllkopf ist im Stand der Technik durch einen Dichtstopfen dicht verschlossen.

Nach dem Einstellen eines Vordrucks in dem Füllkopf, insbesondere durch die Bewegung des Füllkolbens, wird der Dichtstopfen geöffnet. Mit diesem Schritt beginnt der Umformprozess, wobei der Kunststoffvorformling unter Einwirkung des flüssigen Mediums und gegebenenfalls auch einer Reckstange zu einem Behältnis umgeformt wird.

Um die Kontur dieser Form optimal auf dem Behältnis abbilden zu können, ist eine Zeitspanne mit einem konstanten Behältnisinnendruck (Druckhaltezeit) erforderlich, welche im Stand der Technik durch einen Stillstand des Kolbens realisiert wird.

Der vorliegenden Erfindung liegt die Aufgabe zugrunde, derartige Vorrichtungen und Verfahren effizienter und auch vielseitiger einsetzbar zu gestalten. Auch sollen nach Möglichkeit die hohen Spitzenleistungen für Druckerzeugungseinrichtungen reduziert werden. Diese Aufgaben werden erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Expandieren von Kunststoffvorformlingen zu Kunststoffbehältnissen mittels eines flüssigen Mediums weist wenigstens eine Umformungsstation auf, welche die Kunststoffvorformlinge mit dem flüssigen Medium befüllt und expandiert. Weiterhin weist die Vorrichtung wenigstens eine Zuführeinrichtung auf, welche einer Einfülleinrichtung dieser Umformungsstation das flüssige Medium zuführt, wobei diese Einfülleinrichtung dazu geeignet und bestimmt ist, das flüssige Medium in die Kunststoffvorformlinge einzufüllen, und wobei die Vorrichtung eine Druckerzeugungseinrichtung aufweist, welche der Einfülleinrichtung das flüssige Medium unter Druck zuführt.

Erfindungsgemäß weist die Druckerzeugungseinrichtung wenigstens zwei Druckerzeugungseinheiten auf, welche dazu geeignet und bestimmt sind, der Umformungsstation das flüssige Medium unter Druck bereitzustellen und/oder zuzuführen.

Es wird daher vorgeschlagen, dass anstelle der im Stand der Technik üblicherweise verwendeten einen Druckerzeugungseinheit zwei Druckerzeugungseinheiten oder auch mehrere

Druckerzeugungseinheiten verwendet werden. Dies bietet unterschiedliche Vorteile. So wird beispielsweise die Variabilität erhöht, weil durch die beiden Druckerzeugungseinheiten auch unterschiedliche Produkte zugeführt werden können. Auch werden auf diese Weise die Leistungsanforderungen an nur eine Druckerzeugungseinheit abgesenkt und diese können geringer dimensioniert werden bzw. auch mit geringerer Leistung gefahren werden.

Im Rahmen der vorliegenden Anmeldung wird unter der Umformungsstation die gesamte Einrichtung verstanden, welche insbesondere auch wenigstens eine Druckerzeugungseinrichtung und wenigstens eine Einfülleinrichtung aufweist. Unter der Einfülleinrichtung wird derjenige Bestandteil der Vorrichtung verstanden, der die Flüssigkeit in das jeweilige Behältnis einfüllt.

Bei einer weiteren vorteilhaften Ausführungsform weist die Vorrichtung eine Vielzahl von derartigen Umformungsstationen auf. Dabei ist es möglich und bevorzugt, dass jeder dieser Umformungsstationen jeweils zwei oder gegebenenfalls auch mehrere Druckerzeugungseinheiten zugeordnet sind. Bevorzugt weist die Vorrichtung einen Träger auf, an dem die Umformungsstationen angeordnet sind. Insbesondere kann es sich hierbei um einen drehbaren Träger und insbesondere um einen um eine vorgegebene Drehachse drehbaren Träger handeln, an dessen Außenumfang die Umformungsstationen angeordnet sind. Es wäre jedoch auch denkbar, dass die Umformungsstationen wenigstens abschnittsweise entlang eines geradlinigen Transportpfads transportiert werden. So könnten die Umformungsstationen etwa an einer umlaufenden Kette angeordnet sein. Auch wäre es denkbar, dass die Umformungsstationen geradlinig transportiert werden oder dass die Behältnisse in stationäre Umformungsstationen eingebracht bzw. zu diesen transportiert werden.

Bei einer weiteren bevorzugten Ausführungsform weist die Umformungsstation eine Umformungsform auf, innerhalb derer die Kunststoffvorformlinge angeordnet werden können, um sie so mit dem flüssigen Produkt zu expandieren. Diese Umformungsformen können dabei derart ausgestaltet sein, dass die Kunststoffvorformlinge gegen Innenwandungen dieser Umformungsstationen expandiert werden.

Bei einer weiteren vorteilhaften Ausführungsform weist die Vorrichtung eine Druckmesseinrichtung auf, welche wenigstens zeitweise einen Druck des abzufüllenden Mediums misst. Diese Druckmesseinrichtung kann dabei beispielsweise an einem Füllkopf (also insbesondere in einem Bereich der Einfülleinrichtung) angeordnet sein.

Bei einer weiteren vorteilhaften Ausführungsform weist die Vorrichtung eine Anlageeinrichtung auf, um den Füllkopf an den jeweiligen Kunststoffvorformling anzulegen.

Bei einer weiteren bevorzugten Ausführungsform weist die Umformungsstation eine Reckstange auf, die in das Innere der Kunststoffvorformlinge einführbar ist, um diese in ihrer Längsrichtung zu dehnen. Dabei ist es auch möglich, dass diese Reckstange als Hohlkörper ausgebildet ist und im Inneren einen Kanal zum Leiten eines fließfähigen, insbesondere flüssigen, Mediums aufweist.

Im Stand der Technik tritt teilweise das Problem auf, dass die abzufüllende Flüssigkeit einen Kunststoffvorformling schneller auskühlt als Luft und auf diese Weise sehr hohe Füllgeschwindigkeiten nötig sind, um den Kunststoffvorformling zu expandieren. Der Kunststoffvorformling soll nämlich in möglichst noch heißem Zustand verformt werden, insbesondere um Weißbruch zu vermeiden. So wäre beispielsweise bei einer 1,5 l Flasche in 0,1 Sekunden ein durchschnittlicher Volumenstrom von 15 l/sek notwendig, was wiederum eine relativ hohe Belastung hinsichtlich einer Antriebsdimensionierung der Druckerzeugungseinrichtung bedeutet. Auch die Nennweiten der Komponenten werden durch den sehr hohen Volumenstrom sehr hoch gehalten.

Um also bei größeren Behältern trotz allem einen Antrieb zu finden, bei dem noch Drehmomentreserven vorhanden sind, müsste auf ein anderes Konzept umgestellt werden. Wenn noch größere Flaschentypen hergestellt werden sollen, müssen höhere Volumenströme realisiert werden. Außerdem steigt aufgrund der höheren Strömungsgeschwindigkeit der Gegendruck des Kopfes und der durchströmten Komponenten. Auch dadurch muss der Antrieb höhere Lasten bedienen. Diese beiden Zusammenhänge stehen im Widerspruch und können daher zu großen Problemen bei der Antriebsoptimierung führen, da Komponenten, welche höhere Lasten bedienen können, meist auch eine höhere Trägheit aufweisen und damit eben gerade keine höheren Dynamiken realisieren können.

Die vorliegende Erfindung überkommt dieses Problem durch das Vorsehen zweier Druckerzeugungseinrichtungen, die einerseits gemeinsam das jeweilige Druckniveau und/oder den nötigen Gesamtvolumenstrom herstellen können, wobei andererseits jedoch auch auf besonders schwere Komponenten verzichtet werden kann.

Es wird daher wie oben erwähnt vorgeschlagen, dass die Druckerzeugung nicht von einem einzigen Antrieb bzw. von einer Druckerzeugungseinheit durchgeführt wird, sondern von mehreren und insbesondere von mehreren gleichzeitig. Dies kann wie unten genauer erwähnt sowohl bei Pumpen als auch bei Kolben/Zylinderantrieben sinnvoll sein. Die Anforderungen der jeweiligen Antriebe hinsichtlich Dynamikbelastung, Durchmesser des Kolbens werden deutlich geringer, wenn man diese Anforderungen insbesondere durch eine geschickte Parallelschaltung bzw. gegebenenfalls auch in Reihenschaltung der Antriebskomponenten bewältigt.

Bei einer weiteren vorteilhaften Ausführungsform sind die beiden Druckerzeugungseinheiten derart parallel geschaltet, dass sie der Umformungsstation das flüssige Medium gemeinsam zuführen können und bevorzugt auch gleichzeitig zuführen können. Dabei ist es möglich, dass die beiden Druckerzeugungseinheiten parallel betrieben werden, also in gleicher Weise angesteuert werden. Auch wäre es möglich, dass die Druckerzeugungseinheiten unterschiedlich angesteuert werden, um etwa während dem Füll- und Expandierprozess unterschiedlichen Druck- und Volumenstromanforderungen genügen zu können. Daneben wäre jedoch auch eine Reihenschaltung der Druckerzeugungseinheiten möglich.

Bei einer weiteren bevorzugten Ausführungsform sind die wenigstens zwei Druckerzeugungseinheiten bzw. beide Druckerzeugungseinheiten jeweils über Flüssigkeitsleitungen mit der Einfülleinrichtung verbunden. Bevorzugt handelt es sich hierbei um teilweise getrennte und bevorzugt vollständig getrennte Flüssigkeitsleitungen, die die beiden Druckerzeugungseinheiten jeweils mit der Einfülleinrichtung, das heißt insbesondere dem Füllkopf, verbinden. Auf diese Weise kann die Flüssigkeit über diese beiden getrennten Zuleitungen der Einfülleinrichtung zugeführt werden.

Bevorzugt weisen die Druckerzeugungseinheiten auch zumindest teilweise und bevorzugt im Wesentlichen vollständig getrennte Zuleitungen auf, welche diesen wiederum (insbesondere ausgehend von einem Reservoir) die (abzufüllende) Flüssigkeit zuführen.

Bei einer weiteren vorteilhaften Ausführungsform weist die Einfülleinrichtung einen Sammelraum zur Aufnahme des flüssigen Mediums auf. In diesen Sammelraum können die oben erwähnten Flüssigkeitsleitungen münden. Besonders bevorzugt münden die beiden Zuführleitungen im Sammelraum an unterschiedlichen Positionen, beispielsweise an unterschiedlichen Positionen in einer Umfangsrichtung der Einfülleinrichtung. Diese Umfangsrichtung kann beispielsweise bezüglich der Längsrichtung der zu expandierenden Kunststoffvorformlinge definiert sein.

Bei einer weiteren bevorzugten Ausführungsform weist die Einfülleinrichtung einen Sammelraum zur Aufnahme des flüssigen Mediums auf. Dieser Sammelraum steht wenigstens zeitweise mit jeder der Druckerzeugungseinheiten in Strömungsverbindung. Dabei wäre es jedoch möglich, dass zwischen dem Sammelraum und der Druckerzeugungseinrichtung Ventile vorgesehen sind, welche einen Produktstrom von der jeweiligen Druckerzeugungseinheit zu dem Sammelraum steuern können.

Bei einer weiteren vorteilhaften Ausführungsform weisen die Druckerzeugungseinheiten jeweils Antriebseinrichtungen auf, die besonders bevorzugt unabhängig voneinander steuerbar sind. Diese Antriebseinrichtungen können bevorzugt motorische Antriebe und insbesondere elektromotorische Antriebe und insbesondere linearmotorische Antriebe aufweisen. So kann beispielsweise ein Linearmotor vorgesehen sein, der eine Kolbenbewegung durchführt. Dieser Linearmotor kann dabei mit der Kolbeneinrichtung die unten genauer beschrieben wird, verbunden sein.

Die Antriebseinrichtung kann eine Getriebeeinheit, beispielsweise ein Planetengetriebe aufweisen. Besonders bevorzugt weist die Antriebseinrichtung auch einen Spindelantrieb auf.

Bei einer weiteren bevorzugten Ausführungsform weist die Antriebseinrichtung auch eine Positionserfassungseinheit auf, welche eine Position eines Druckzylinders erfasst. Auf diese Weise kann gezielt die Zuführung des flüssigen Mediums in die Kunststoffvorformlinge gesteuert und/oder geregelt werden.

Bei einer weiteren vorteilhaften Ausführungsform weisen die Druckerzeugungseinheiten jeweils einen Flüssigkeitsraum und eine gegenüber diesem Flüssigkeitsraum bewegbare Kolbeneinrichtung auf. Durch eine Bewegung dieser Kolbeneinrichtung wird hier die Flüssigkeit letztlich in die Behältnisse gepresst. Bei einer weiteren bevorzugten Ausführungsform ist wenigstens eine Druckerzeugungseinheit und sind bevorzugt beide Druckerzeugungseinheiten Pumpeneinrichtungen und insbesondere Pumpeneinrichtungen, welche aus einer Gruppe von Pumpeneinrichtungen ausgewählt sind, welche hydraulische Pumpen, Sinuspumpen, Axialkolbenpumpen, Blasebalgpumpen, Mebranpumpen, Scrollpumpen, Rotationskolbenpumpen, Exzenterschneckenpumpen, Förderschnecken, Impellerpumpen, Kettenpumpen, Ringkolbenpumpen, Schlauchpumpen, Schraubenspindelpumpen, Schüttelpumpen, Zahnriemenpumpen und dergleichen enthält.

Bei einer bevorzugten Ausführungsform können die durch die Druckerzeugungseinheiten erzeugten verdichteten Volumenströme in dem Füllkopf gesammelt werden, welcher insbesondere zu dem Vorformling hin dichtend aufsitzt und besonders bevorzugt für eine konstante Fließfront sorgt. Bevorzugt weist der Füllkopf einen Dichtstopfen auf, der je nach Stellung den Weg zu dem Kunststoffvorformling freigeben kann. Daneben wäre es auch denkbar, dass die Druckerzeugungseinheiten eine Kolbeneinrichtung aufweisen, welche wenigstens zeitweise noch einmal nachgedrückt werden kann, um auf diese Weise Druckspitzen zu erzeugen.

Daneben wäre es auch denkbar, dass unterschiedliche Druckniveaus durch die beiden Druckerzeugungseinheiten realisiert werden, wobei besonders bevorzugt Ringkanäle zur Verfügung stehen, welche zum Halten bzw. Aufbewahren dieser unterschiedlichen Druckniveaus dienen. Auf diese Weise wäre es möglich, unterschiedliche Druckniveaus zu erreichen. So wäre es beispielsweise denkbar, dass ein erster Ringkanal sehr große Querschnitte besitzt, um so ein kleines Druckniveau zur Verfügung zu stellen und um möglichst schnell den Behälter auszuformen.

Eine zweite Druckstufe kann ein sehr hohes Druckniveau besitzen, um eine Ausprägung des Behältnisses sicherzustellen. Hierzu könnte etwa ein Ringkanal mit einem kleinen Querschnitt zur Verfügung stehen. Auf diese Weise könnten die beiden Druckstufen so in dem Füllkopf (d.h. der Einfülleinrichtung) gesammelt werden.

Bei einer weiteren Ausgestaltung wäre es auch möglich, mehrere Kolben und/oder Zylinder vorzusehen, um auf diese Weise unterschiedliche Produkte vorzuhalten, beispielsweise in den Druckzylindern zu speichern und so entweder der Fülleinrichtung gemischt zuzuführen oder aber einzeln zuzuführen.

Weiterhin ist es auch möglich, höhere Volumenströme bei einer gleichbleibenden Drehmomentreserve der Antriebe vorzusehen. Bei einer größeren Dimensionierung eines Antriebs ist es möglich, dass die Dynamiken nicht mehr im erforderlichen Maß realisiert werden können und der Antrieb die entsprechenden Belastungen nicht bewältigt.

Daneben wäre es durch die Erfindung auch leichter möglich, eine sehr hohe Spreizung an Volumina der Kundenobjekte zu fahren. Falls beispielsweise ein Kunde eine 0,5 l Flasche herstellen möchte, könnte beispielsweise nur ein Kolben verfahren werden und bei einer beispielsweise 6,0 l Flasche zwei oder drei Kolben den Volumenstrom aufbringen. Auf diese Weise ist es möglich, eine entsprechende Anlage jeweils auf unterschiedliche Kundenwünsche einzustellen, wobei es bevorzugt auch möglich ist, durch eine geschickte Kombination der Druckerzeugungseinheiten eventuell erforderliche Maxima abzudecken.

Bei einer weiteren vorteilhaften Ausführungsform weist die Einfülleinrichtung ein Verschließelement auf, welches in wenigstens einer Stellung einen Zufluss der Flüssigkeit in das Behältnis sperrt und in wenigstens einer Stellung diesen Zufluss zulässt. Hierbei kann es sich beispielsweise um den oben erwähnten Dichtstopfen handeln, der je nach Stellung einen Flüssigkeitsstrom in den Kunststoffvorformling unterbinden oder zulassen kann.

Die vorliegende Erfindung ist weiterhin auf ein Verfahren zum Expandieren von Kunststoffvorformlingen zu Kunststoffbehältnissen mittels eines flüssigen Mediums und insbesondere mittels eines Füllguts gerichtet, wobei wenigstens eine Umformungsstation die Kunststoffvorformlinge mit dem flüssigen Medium befüllt und expandiert und wobei mit wenigstens einer Zuführeinrichtung einer Einfülleinrichtung der Umformungsstation das flüssige Medium zugeführt wird, wobei die Einfülleinrichtung das flüssige Medium in die Kunststoffvorformlinge einfüllt, und wobei eine Druckerzeugungseinrichtung der Umformungsstation das flüssige Medium unter Druck zuführt.

Erfindungsgemäß weist die Druckerzeugungseinrichtung wenigstens zwei Druckerzeugungseinheiten auf, welche der Umformungsstation das flüssige Medium unter Druck bereitstellen.

Es wird daher auch verfahrensseitig vorgeschlagen, dass mittels wenigstens zwei Druckerzeugungseinheiten der Druck zum Expandieren der Kunststoffvorformlinge bereitgestellt wird. Bevorzugt führen diese Druckerzeugungseinheiten den Druck wenigstens teilweise gleichzeitig zu.

Eine erfindungsgemäße Vorrichtung zum Expandieren von Kunststoffvorformlingen zu Kunststoffbehältnissen mittels eines flüssigen Mediums weist wenigstens eine Umformungsstation auf, welche die Kunststoffvorformlinge mit dem flüssigen Medium befüllt und expandiert. Weiterhin weist die Vorrichtung wenigstens eine Zuführeinrichtung auf, welche einer Einfülleinrichtung dieser Umformungsstation das flüssige Medium zuführt, wobei diese Einfülleinrichtung dazu geeignet und bestimmt ist, das flüssige Medium in die Kunststoffvorformlinge einzufüllen, und wobei die Vorrichtung wenigstens eine Druckerzeugungseinrichtung aufweist, welche der Einfülleinrichtung das flüssige Medium unter Druck zuführt.

Erfindungsgemäß weist die Druckerzeugungseinrichtung eine Vorspanneinrichtung auf, welche wenigstens ein Element der Druckerzeugungseinrichtung vorspannt.

Auch bei dieser Ausgestaltung wird also vorgeschlagen, die Spitzenleistung zu reduzieren, hierbei wird jedoch insbesondere vorgeschlagen, dass wenigstens ein Element der Druckerzeugungseinrichtung, beispielsweise eine Kolbeneinrichtung, vorgespannt wird.

Um die Belastung des Antriebs der Druckerzeugung zu reduzieren, wird also vorgeschlagen, mit einer Vorspannung dieses Antriebs zu arbeiten. Insbesondere handelt es sich hier um eine translatorische Vorspannung.

Bei einer bevorzugten Ausführungsform weist die Druckerzeugungseinrichtung einen Aufnahmeraum für das flüssige Medium auf sowie eine Kolbeneinrichtung, die gegenüber diesem Aufnahmeraum beweglich ist, um durch eine Kolbenbewegung dieser Kolbeneinrichtung das flüssige Medium zu der Einfülleinrichtung zu drängen. Bei dieser Ausgestaltung ist also die Druckerzeugungseinrichtung als beweglicher Kolben ausgeführt bzw. weist einen solchen auf.

Besonders bevorzugt wirkt die Vorspanneinrichtung auf diese Kolbeneinrichtung zumindest mittelbar und drängt diese in eine vorgegebene Richtung. Insbesondere drängt die Vorspanneinrichtung die Kolbeneinrichtung in eine Richtung, welche eine Verkleinerung des Aufnahmeraums bewirkt und insbesondere ein Strömen bzw. Drängen des flüssigen Mediums in Richtung des zu expandierenden und zu befüllenden Kunststoffvorformlings.

Bei einer weiteren vorteilhaften Ausführungsform spannt die Vorspanneinrichtung das Element der Druckerzeugungseinrichtung in einer translatorischen Richtung vor. Bevorzugt bewegt sich daher die Kolbeneinrichtung in einer translatorischen bzw. linearen Richtung und die Vorspanneinrichtung bewirkt auch eine Vorspannung in eben dieser Richtung.

Bei einer weiteren vorteilhaften Ausführungsform weist die Vorspanneinrichtung ein Vorspannelement auf, welches aus einer Gruppe von Vorspannelementen ausgewählt ist, welche mechanische Federn, permanentmagnetische Federn, pneumatische Federn, hydraulische Elemente, linearmotorische Elemente, Kombinationen hieraus und dergleichen enthält.

So könnte beispielsweise eine mechanische Feder vorgesehen sein, welche auf die Kolbeneinrichtung wirkt, beispielsweise an einer Rückseite der Kolbeneinrichtung angelenkt ist. Daneben könnte die Vorspannung auch als hydraulische Feder ausgeführt sein. So könnte beispielsweise eine hydraulische Feder über eine Vorförderpumpe gewährleistet werden. Daneben könnte jedoch auch eine rotatorische Vorspannung vorliegen, etwa in der Art einer Drehfeder. Daneben könnte auch eine separate Pumpe vorgesehen sein, um die Vorspannung zu erzeugen. Auch wäre es denkbar, hierzu einen Druckübersetzer mit Druckluft vorzusehen.

Bevorzugt greift eine Vorspanneinrichtung an einer Rückseite der Kolbeneinrichtung an. Es wäre jedoch auch möglich, dass diese Vorspanneinrichtung außerhalb der Druckerzeugungseinrichtung vorgenommen wird, insbesondere in einem separaten Zylinder, der beispielsweise eine gemeinsame Achse mit der Druckerzeugungseinrichtung bzw. dem Füllkolben aufweist.

Es wird darauf hingewiesen, dass die hier beschriebenen Ausführungsformen auch mit den oben genannten Ausführungsformen kombinierbar sind. Auch sind Ausgestaltungen denkbar, bei denen sowohl zwei oder mehrere Druckerzeugungseinrichtungen eingesetzt werden als auch eine Vorspannungseinrichtung verwendet wird. Anstelle des Begriffes Vorspannungseinrichtung können auch die Begriffe Belastungseinrichtung oder Drängeinrichtung verwendet werden.

Bei einer weiteren vorteilhaften Ausführungsform erzeugt die Vorspanneinrichtung im Inneren eines Aufnahmeraums für das flüssige Medium einen Druck, der größer ist als 2 bar, bevorzugt größer als 4 bar, bevorzugt größer als 6 bar und/oder die Vorspanneinrichtung erzeugt im Inneren des Aufnahmeraums für das flüssige Medium einen Druck, der kleiner ist als 40 bar, bevorzugt kleiner als 30 bar und besonders bevorzugt kleiner als 20 bar.

Die Höhe der (mechanischen, pneumatischen oder hydraulischen) Vorspannung wird bevorzugt so gewählt, dass mit einem Gesamtsystem des Antriebs (beispielsweise einem Gesamtsystem aus Motor, Spindel und Vorspannung) die Formzeiten der Kunststoffvorformlinge auf ein Minimum reduziert werden.

Bei einer bevorzugten Ausführungsform weist die Vorrichtung ein Druckreservoir und insbesondere einen Drucktank auf, der die jeweilige Vorspannung speist. Dies kann insbesondere der Fall sein bei einer hydraulischen oder pneumatischen Vorspannung. Dabei ist es möglich, dass die Vorspannung nur zeitweise wirkt, beispielsweise nur zeitweise (beispielsweise nur am Schluss oder Anfang) unterstützt, oder auch während des gesamten Verfahrwegs eine (entweder konstante oder auch unterschiedliche) Vorspannung bzw. Unterstützung mit sich bringt.

Bei einer weiteren vorteilhaften Ausführungsform ist die Vorspannung veränderbar. So wäre es möglich, dass die Vorspannung beispielsweise an die Expansion unterschiedlicher Behältnisse angepasst werden kann. Dabei wäre es sowohl möglich, dass die Vorspannung während der gesamten Bewegung der Kolbeneinrichtung konstant ist, es wäre jedoch auch denkbar, dass sich die Vorspannung während der Bewegung des Kolbens ändert, oder beispielsweise auch nur zu bestimmten Zeitabschnitten auftritt.

Mit anderen Worten kann die Höhe der Vorspannung einen festen Wert haben (beispielsweise bei einer mechanischen Feder dynamisch anpassbar sein (z.B. bei einer pneumatischen Feder über die Höhe des Drucks) und/oder schaltbar sein (z.B. pneumatische oder hydraulische Feder)).

Daneben wäre es auch denkbar, dass eine derartige Vorspannung pneumatisch gestaltet ist und ein entsprechendes Reservoir oder ein Tank so groß ist, dass die Unterstützungskraft über den Verfahrweg nahezu konstant ist.

Auf diese Weise könnte man das Füllen des Tanks durch ein Auf- und Abfahren der Kolbeneinrichtung bewerkstelligen (insbesondere bei Schaltung geeigneter Ventile, indem die Luft auf der Rückseite des Füllkolbens oder des Vorspannkolbens komprimiert wird und so zumindest ein Teil des Luftbedarfs für einen Ausgleichstank hergestellt wird.

Es könnte jedoch auch mit Druckleitungen unterschiedlicher Drücke, beispielsweise einer 10 bar Niederdruckleitung oder einer 40 bar Hochdruckleitung der Druck aufgebracht werden.

Bei einer weiteren vorteilhaften Ausführungsform weist die Druckerzeugungseinrichtung eine Antriebseinrichtung auf, insbesondere einen Elektromotor. Diese Antriebseinrichtung kann dabei eine Bremseinrichtung aufweisen, welche im Bedarfsfall eine Bewegung der Kolbeneinrichtung blockieren kann.

Bei einer weiteren vorteilhaften Ausführungsform weist die Druckerzeugungseinrichtung eine Kolbeneinrichtung auf, welche wenigstens zeitweise auf einem Kolbensitz aufsitzt. In diesem Fall kann die Vorspannkraft direkt in den Kolbensitz geleitet werden.

Bei einer weiteren vorteilhaften Ausführungsform ist die Vorspanneinrichtung abschaltbar. So kann beispielsweise im Falle eines Not-Halts die Vorspannung abgeschaltet und/oder eine Haltebremse einer Motoreinrichtung, etwa eines Servomotors aktiviert werden.

Bei einer vorteilhaften Ausführungsform weist die Antriebseinrichtung zum Antreiben der Zylindereinrichtung eine in einen Rotor integrierte Mutter und eine Spindel (eine Hohlwelle) auf.

Ein Servomotor mit einer integrierten Spindel hat bezüglich Bauraum, Gewicht, Dynamik und Flexibilität viele Vorteile. So könnte beispielsweise auch auf Verbindungselemente zwischen der Antriebseinrichtung und der Linearschraube verzichtet werden.

Daneben wäre es auch möglich, dass die Antriebseinrichtung als Linearmotor ausgeführt ist. So könnte ein Linearmotor direkt mit der Kolbeneinrichtung verbunden werden, um so die Antriebskraft aufzubringen. Auch in diesem Falle könnte zusätzlich eine Vorspannung aufgebracht werden.

Bei einer weiteren vorteilhaften Ausführungsform könnte die Vorrichtung eine Hebeleinrichtung aufweisen, welche dazu geeignet und bestimmt ist, zwei Druckerzeugungseinrichtungen bzw. zwei Zylinder zu betätigen. So könnte es sich bei der Hebeleinrichtung beispielsweise um einen Kniehebel handeln, der die benötigten Kräfte aufbringt. Ein Druckverlauf beim Formen des Behältnisses erfordert einen schnellen Formvorgang und so könnte bei einer fast ausgeformten Flasche ein kleiner Weg und große Haltekräfte angewandt werden. Für eine derartige Anwendung ist ein Kniehebel besonders vorteilhaft und wird unten genauer beschrieben.

Dieser Kniehebel könnte beispielsweise von einem Servomotor mit einer Linearspindel oder auch optional einem Getriebe angetrieben werden, oder auch einer anderen in Längsrichtung verfahrbaren oder rotativen Antriebseinheit. Auch hier kann bevorzugt wiederum eine Vorspannung angewandt werden, es wird jedoch darauf hingewiesen, dass dieses Konzept auch ohne die hier beschriebene Vorspannung möglich ist.

Durch die Geometrie und das Wirkprinzip eines Kniehebels können am Anfang des Verfahrwegs sehr hohe Geschwindigkeiten erreicht werden und damit auch hohe Volumenströme, wohingegen gegen Ende und am unteren Punkt des Kolbenantriebs die Volumenströme abnehmen und die Kraft bis theoretisch ins Unendliche ansteigt. So könnten auch hohe Haltekräfte realisiert werden.

Daneben könnte als Antriebseinrichtung auch eine hydraulische Antriebseinrichtung verwendet werden. Durch die hohen Drücke, die in einer Hydraulik üblich sind, könnte man aufgrund der geringeren Querschnitte, die nötig sind, um einen Kolben in einer bestimmten Kraft zu verschieben, geringere Volumenströme realisieren, welche einen Antrieb vereinfachen. Es könnte beispielsweise eine Hydraulikpumpe, beispielsweise durch einen Bypass, den benötigten Volumenstrom pumpen und bei Bedarf in den Hydraulikzylinder pumpen. Dieser würde eine Verbindung zu dem anzutreibenden Füllkolben bzw. der Kolbeneinrichtung besitzen.

Der Hydraulikzylinder könnte jedoch auch eine Pumpeneinrichtung aufweisen, die das hohe Maß an Dynamik bewerkstelligt, oder auch eine Axialkolbenpumpe, um so die geforderte Dynamik des Antriebs bereitzustellen.

Dabei wäre es möglich, ein System mit einer Pumpeneinrichtung und/oder Druckerzeugungseinrichtung je Umformungsstation vorzusehen, oder auch eine Vorrichtung mit einer oder mehreren Pumpeneinrichtungen parallel, um mehrere Stationen aus einer Hydraulikeinheit betreiben zu können.

Insgesamt bietet die Vorspannung den Vorteil, dass mehr Möglichkeiten in einer Antriebsberechnung und auch größere Volumenströme bei einem gleichen Grundprinzip (Kolben oder Zylinder) möglich sind. Auch ist die Antriebseinrichtung günstiger als ein größerer Antrieb ohne Vorspannung.

Es wird darauf hingewiesen, dass im Folgenden die Vorspanneinrichtung auch als Belastungseinrichtung dargestellt wird bzw. als Kraftbelastungseinrichtung, welche dazu geeignet und bestimmt ist, das Element der Druckerzeugungseinrichtung in einer vorgegebenen Richtung zu belasten.

Die vorliegende Erfindung ist daher weiterhin auf ein Verfahren zum Expandieren von Kunststoffvorformlingen zu Kunststoffbehältnissen mittels eines flüssigen Mediums gerichtet, wobei wenigstens eine Umformungsstation die Kunststoffvorformlinge mit dem flüssigen Medium befüllt und expandiert und wobei mit wenigstens einer Zuführeinrichtung wenigstens einer Einfülleinrichtung der Umformungsstation das flüssige Medium zugeführt wird, wobei die Einfülleinrichtung das flüssige Medium in die Kunststoffvorformlinge einfüllt, und wobei eine Druckerzeugungseinrichtung der Umformungsstation das flüssige Medium unter Druck zuführt.

Erfindungsgemäß wird wenigstens ein Element der Druckerzeugungseinrichtung wenigstens zeitweise mittels einer Vorspanneinrichtung vorgespannt. Weitere Vorteile und Ausführungsformen ergeben sich aus den beigefügten Zeichnungen.

Darin zeigen:
- Fig. 1: Eine grob schematische Darstellung einer erfindungsgemäßen Vorrichtung;
- Fig. 2: Eine Darstellung einer Umformungsstation nach dem internen Stand der Technik der Anmelderin;
- Fig. 3: Eine Darstellung einer erfindungsgemäßen Umformungsstation;
- Fig. 4: Eine weitere Darstellung einer erfindungsgemäßen Umformungsstation;
- Fig. 5: Eine Darstellung einer Druckerzeugungseinrichtung mit Kniehebel;
- Fig. 6: Eine Darstellung einer Umformungsstation mit Vorspanneinrichtung;
- Fig. 7: Eine Darstellung einer Umformungseinrichtung mit einer hydraulischen oder pneumatischen Antriebseinrichtung.

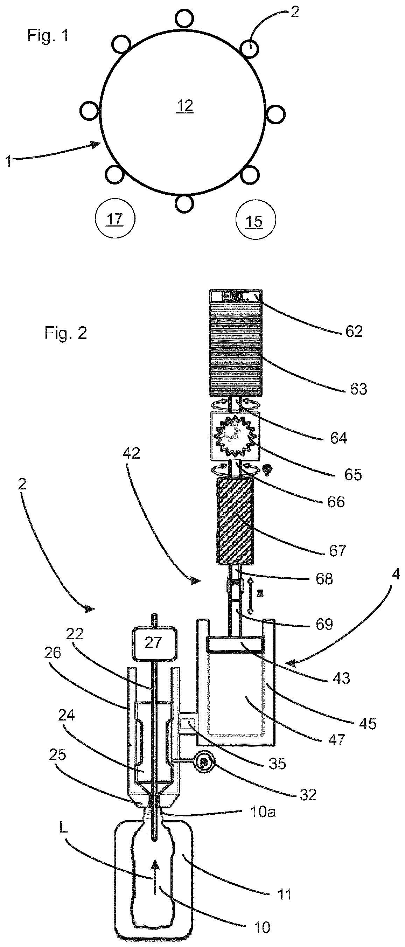

Figur 1 zeigt eine schematische Darstellung einer erfindungsgemäßen Vorrichtung zum Umformen und Befüllen von Behältnissen. Diese weist einen drehbaren Träger 12 auf, an dem eine Vielzahl von Umform-/ Fülleinrichtungen angeordnet ist. Diese Umformungseinrichtungen dienen wie oben erwähnt dazu, um die Kunststoffvorformlinge gleichzeitig mit einem Behältnis zu befüllen und zu expandieren. Über eine Zuführeinrichtung 15, wie etwa einen Zuführstern, werden Kunststoffvorformlinge der Vorrichtung zugeführt und die fertigen und befüllten Behältnisse werden anschließend über eine Abführeinrichtung 17 aus der Vorrichtung abtransportiert.

Figur 2 zeigt eine Umformungsstation 2 nach dem internen Stand der Technik der Anmelderin. Dabei ist hier die eigentliche Einfülleinrichtung vorgesehen, welche eine Beaufschlagungseinrichtung 25 aufweist, welche an eine Mündung 10a der zu expandierenden Kunststoffvorformlinge anlegbar ist, um so die Kunststoffbehältnisse 10 zu befüllen und auszuformen. Zu diesem Zweck weist die Umformungseinrichtung eine Expansionsform 11 auf, innerhalb derer die Kunststoffvorformlinge zu den Kunststoffflaschen bzw. Kunststoffbehältnissen expandiert werden. Das Bezugszeichen 26 kennzeichnet ein Füllgehäuse, innerhalb dessen eine Verschließeinrichtung 24, wie etwa ein Verschließstopfen angeordnet ist. Durch eine Bewegung dieses Ventilkörpers in der Längsrichtung L des Behältnisses kann die Zufuhr von Flüssigkeit in das Behältnis 10 reguliert werden.

Das Bezugszeichen 22 kennzeichnet eine sogenannte Reckstange, die in das Innere der Behältnisse einführbar ist, um diese so in deren Längsrichtung zu dehnen. Zu diesem Zweck weist die Vorrichtung eine Antriebseinrichtung 27 auf, welche dazu geeignet und bestimmt ist, die Reckstange in ihrer Längsrichtung zu bewegen.

Das Bezugszeichen 4 kennzeichnet in seiner Gesamtheit die Druckerzeugungseinrichtung, welche dem Kunststoffbehältnis die Flüssigkeit unter Druck zuführt. Hier weist diese Druckerzeugungseinrichtung nur eine Druckerzeugungseinheit auf. Diese Druckerzeugungseinrichtung, genauer die Druckerzeugungseinheit weist dabei einen Aufnahmeraum 45 auf, innerhalb dessen die einzufüllende Flüssigkeit 47 vorgesehen ist. Daneben können auch Zuleitungen vorgesehen sein, welche (etwa ausgehend von einem nicht gezeigten Reservoir) die Flüssigkeit dem Aufnahmeraum 45 zuführen.

Das Bezugszeichen 43 kennzeichnet eine Kolbeneinrichtung, welche in der Richtung x beweglich ist, um so die Flüssigkeit über eine Verbindungsleitung 35 zu dem eigentlichen Einfüllkopf (oben auch als Einfülleinrichtung bezeichnet) zu transportieren. Das Bezugszeichen 62 kennzeichnet die Antriebseinrichtung insbesondere in Form eines Servomotors 63, der die Bewegung der Kolbeneinrichtung 43 antreibt. Dazu erzeugt die Antriebseinrichtung eine Drehbewegung, welche über eine Abtriebswelle 64 ausgegeben wird. Das Bezugszeichen 65 kennzeichnet eine Getriebeeinrichtung, wie hier ein Planetengetriebe, und das Bezugszeichen 66 eine weitere Abtriebswelle. Diese Abtriebswelle treibt wiederum eine Linearspindel 67 an und diese bewegt Stangenelemente 68 und 69, die über eine Kupplung verbunden sind und an denen wiederum die Kolbeneinrichtung angeordnet ist.

Daher weist bei der in Figur 2 gezeigten Ausführungsform die Vorrichtung lediglich eine einzige Druckerzeugungseinrichtung auf, welche den Druck zum Befüllen und Expandieren der Behältnisse aufbringen muss. Das Bezugszeichen 32 kennzeichnet eine Druckmesseinrichtung, welche einen im Füllgehäuse 26 auftretenden Druck misst.

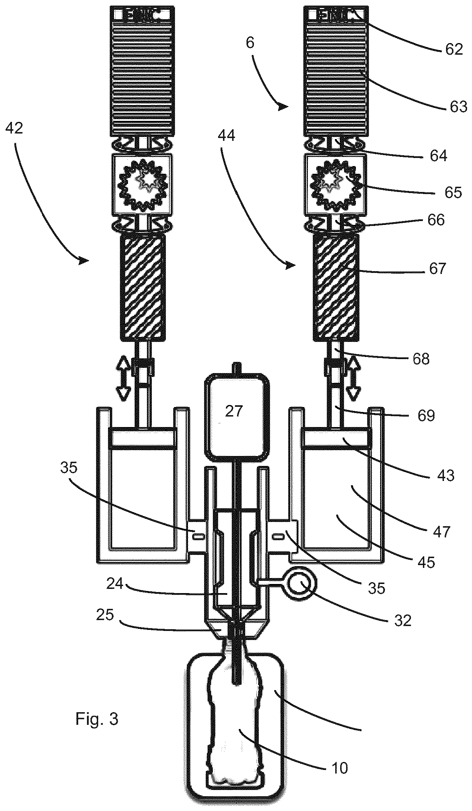

Figur 3 zeigt eine Ausgestaltung einer erfindungsgemäßen Vorrichtung bzw. Umformungsstation 2. Hier ist der eigentliche Einfüllkopf in ähnlicher Weise aufgebaut, wie bei der in Figur 2 gezeigten Ausführungsform, und wird daher nicht genauer erläutert. Im Gegensatz zu der in Figur 2 gezeigten Ausführungsform sind hier jedoch zwei Druckbeaufschlagungseinheiten 42 und 44 vorgesehen. Diese können in gleicher Weise aufgebaut sein und wurden bereits oben beschrieben, sodass dies nicht wiederholt wird. Dabei ist es möglich, dass diese Druckbeaufschlagungseinheiten zeitgleich arbeiten, sie können jedoch auch versetzt die Behältnisse mit einem flüssigen Medium befüllen. Daneben wäre es auch möglich, dass diese beiden Druckbeaufschlagungseinheiten 42 und 44 unterschiedliche Flüssigkeiten in ihren jeweiligen Aufnahmeräumen 47 aufnehmen und so beispielsweise ein gemischtes Produkt dem Behältnis 10 zugeführt werden kann.

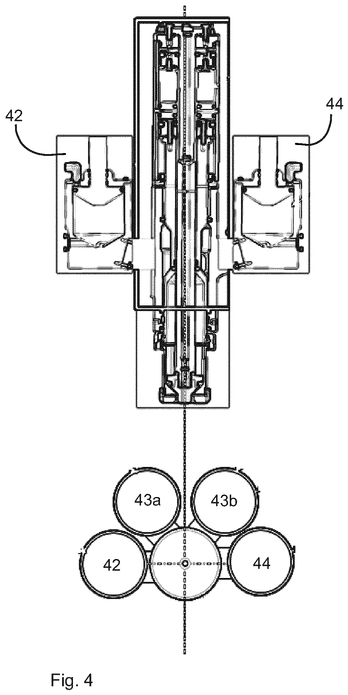

Figur 4 zeigt eine Ausgestaltung, bei der insgesamt vier Druckbeaufschlagungseinheiten 42 bis 44 vorhanden sind, welche ebenfalls wieder über Verbindungsleitungen mit der eigentlichen Einfülleinrichtung verbunden sind. Diese vier Druckerzeugungseinheiten können dabei mehrere unterschiedliche Produkte enthalten, beispielsweise vier unterschiedliche Produkte. In diesem Falle wäre es möglich, dass wiederum die Antriebskraft minimiert wird und auch ein Produktgemisch abgefüllt wird. Dabei ist es möglich, dass in jeder dieser Druckerzeugungseinrichtungen ein Produkt vorhanden ist, das entweder gleichzeitig oder nacheinander über die eigentliche Einfülleinrichtung in den umzuformenden Kunststoffvorformling gedrückt wird. Dabei könnte die erforderliche Antriebsleistung für eine dieser vier Druckerzeugungseinheiten maßgeblich reduziert sein gegenüber dem Leistungsbedarf bei Verwendung von nur einer einzigen Druckerzeugungseinheit.

Neben oder anstelle der oben beschriebenen Antriebseinrichtungen könnten jedoch auch hydraulische Antriebseinrichtungen vorgesehen sein, oder auch Motoren mit einer im Rotor integrierten Mutter und einer Spindel, die beispielsweise als Hohlwelle ausgeführt ist.

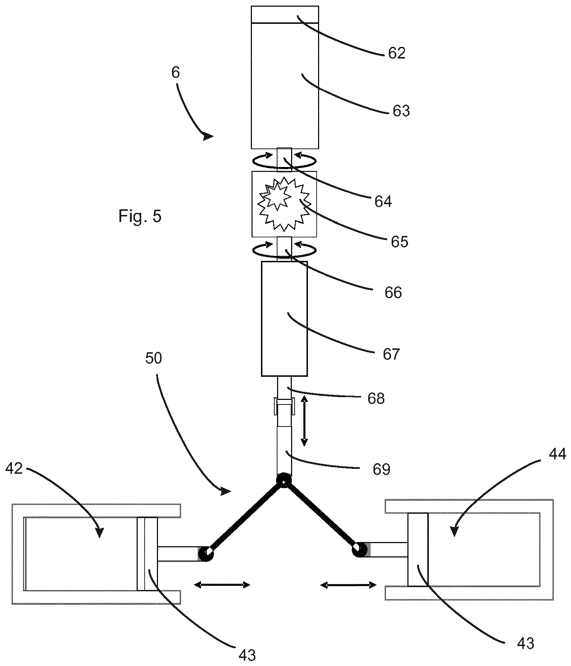

Figur 5 zeigt eine weitere Ausgestaltung der vorliegenden Erfindung. Bei dieser Ausgestaltung sind ebenfalls zwei Druckerzeugungseinheiten 42 und 44 vorgesehen, wobei jedoch die eigentlichen Fülleinrichtungen hier nicht dargestellt sind. Bei dieser Ausgestaltung ist lediglich ein Antrieb der oben bezeichneten Art vorgesehen, daneben jedoch eine Hebeleinrichtung 50, welche die so erzeugten Kräfte auf die Kolbeneinrichtungen 43 überträgt. Diese Hebeleinrichtung ist hier als sogenannter Kniehebel ausgestaltet, der an beiden Kolbeneinrichtungen 43 angelenkt ist, um diese so zu bewegen. In diesem Falle werden also mit einem Kniehebel die benötigten Kräfte aufgebracht. Der Druckverlauf beim Formen der Behältnisse erfordert hier einen schnellen Formvorgang und bei fast ausgeformter Flasche einen geringen Weg und hohe Haltekräfte.

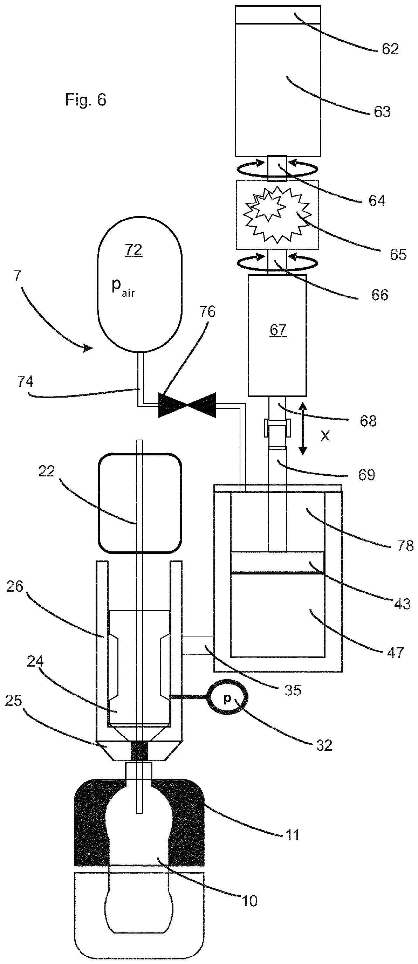

Figur 6 zeigt eine weitere Ausgestaltung der vorliegenden Erfindung. Bei dieser Ausgestaltung ist die eigentliche Einfülleinrichtung ähnlich aufgebaut, wie die oben erwähnte Einfülleinrichtung. Auch die Antriebseinrichtung 62-69 ist ähnlich aufgebaut wie oben und wird daher nicht mehr beschrieben. Zusätzlich weist die in Figur 6 gezeigte Vorrichtung jedoch eine Vorspanneinrichtung auf bzw. eine Vorbelastungseinrichtung 7, welche die Kolbeneinrichtung 43 in der Richtung x nach unten vorspannt. Bei der hier gezeigten Ausführungsform weist diese Vorspanneinrichtung ein Reservoir 72 auf, in dem beispielsweise Luft unter einem bestimmten Druck gespeichert werden kann. Über eine Verbindungsleitung 74 und ein Ventil 76 kann diese Luft in den Raum 78 eingespeist werden. In diesem Aufnahmeraum kann die unter Druck stehende Luft zusätzlich die Kolbeneinrichtung 43 belasten, sodass diese nach unten gedrängt wird.

Damit ist bei der in Figur 6 gezeigten Ausführungsform die Angriffsfläche bzw. der Angriffsbereich für die Vorspanneinrichtung die Rückseite der Kolbeneinrichtung 43.

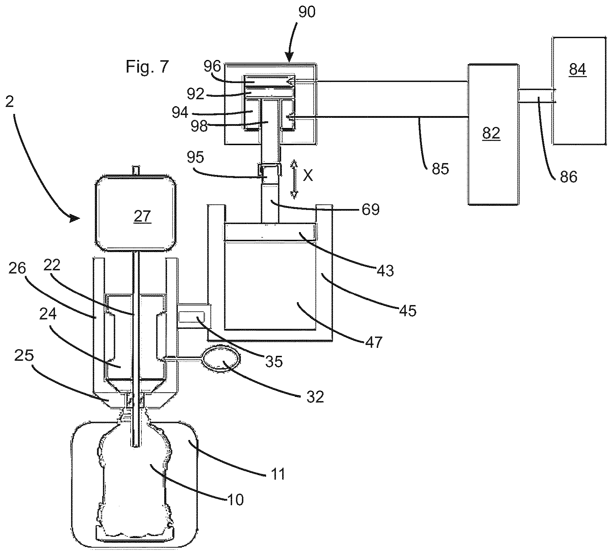

Figur 7 zeigt eine weitere Ausgestaltung der erfindungsgemäßen Vorrichtung. Auch bei dieser Ausgestaltung ist die eigentliche Einfülleinrichtung in der oben gezeigten Art ausgebildet. Auch hier ist wiederum ein Aufnahmeraum 47 vorhanden und eine gegenüber diesem Aufnahmeraum bewegliche Kolbeneinrichtung. Die in Figur 7 gezeigte Ausgestaltung unterscheidet sich durch die Art des Antriebs für die Kolbeneinrichtung. Als Antriebseinrichtung wird hier eine hydraulische oder pneumatische Antriebseinrichtung verwendet. Zu diesem Zweck ist auch hier wiederum ein Hydraulikraum 94 vorgesehen, demgegenüber ein Kolbenelement 92 ebenfalls in der Richtung x bewegbar ist. Das Bezugszeichen 98 kennzeichnet eine Kolbenstange, die wiederum mit der Kolbeneinrichtung 43 mittels einer Kopplungseinrichtung gekoppelt ist.

Das Bezugszeichen 82 kennzeichnet ein Ventil, welches gesteuert schaltbar ist. Durch eine genaue Schaltung dieses Ventils 82 könnte ein Volumen zeitgesteuert eingestellt werden. Daneben wären innerhalb dieser Antriebseinrichtung 90 auch mechanische Anschläge denkbar oder ein veränderter Volumenstrom einer Pumpe. Das Bezugszeichen 84 kennzeichnet eine entsprechende Hydraulikpumpe, welche über eine Verbindungsleitung 86 mit dem Ventil 82 verbunden ist. Das Ventil kann dabei derart gesteuert sein, dass es sowohl in den Raumabschnitt 96 als auch in den Raumabschnitt (bzw. Hydraulikraum) 94 ein Hydraulikmedium führen kann. Dabei ist es auch denkbar, dass die hier beschriebene Hydraulikantriebseinheit 90 nur mit einer Stange mit der Kolbeneinrichtung 43 verbunden werden müsste und auf diese Weise verschmutzungsintensive Komponenten keine direkte Verbindung besitzen. Das Bezugszeichen 85 kennzeichnet eine Verbindungsleitung.

Als Hydraulikpumpe könnten unterschiedlichste Pumpenarten aus dem Stand der Technik in Betracht gezogen werden. Daneben kann auch die Kopplungseinrichtung 95 zwischen der Kolbenstange 98 und der Füllkolbenstange 69 eine echte Trennung der Bauteile bewirken.

Bevorzugt weist daher allgemein die Vorrichtung eine Kopplungseinrichtung auf, welche wenigstens ein Element der Antriebseinheit mit wenigstens der Kolbeneinrichtung koppelt.

Durch die hier beschriebene Vorspannung, die auch durch die in Figur 7 gezeigte Ausgestaltung bzw. die Variante erreicht werden kann, werden mehrere Aufgaben erfüllt. Auf diese Weise wird die Antriebseinrichtung günstiger als ein entsprechender größerer Antrieb ohne eine Vorspannung. Auch kann theoretisch auf einen Druckanschluss verzichtet werden.

Die Verwendung einer Hydraulikantriebseinheit hat die Vorteile, dass diese üblicherweise geringere Abmaße aufweist. Daneben können auch oft schnellere Schaltzeiten realisiert werden und es können zum Teil aus dem Stand der Technik bekannte bzw. vorgefertigte Komponenten verwendet werden.

### Bezugszeichenliste

- 1: Vorrichtung
- 2: Umformungsstation
- 4: Druckerzeugungseinrichtung
- 6: Antriebseinrichtung
- 7: Vorspanneiricthung, Belastungseinrichtung
- 10: Kunststoffbehältnisse
- 10a: Mündung
- 11: Expansionsform
- 12: drehbarer Träger
- 15: Zuführeinrichtung
- 17: Abführeinrichtung
- 22: Reckstange
- 24: Verschließeinrichtung
- 25: Beaufschlagungseinricthung
- 26: Füllgehäuse
- 27: Antriebseinrichtung
- 32: Druckmesseinrichtung
- 35: Verbindungsleitung
- 42, 44: Druckerzeugungseinheit
- 43: Kolbeneinrichtung
- 43a,b: Druckerzeugungseinheit
- 45: Aufnahmeraum
- 47: einzufüllende Flüssigkeit
- 50: Hebeleinrichtung
- 62: Antriebseinrichtung
- 63: Servomotor
- 64: Abtriebswelle
- 65: Getriebeeinrichtung
- 66: Abtriebswelle
- 67: Linearspindel
- 68: Stangenelement
- 69: Stangenelement
- 69: Füllkolbenstange
- 72: Reservoir
- 74: Verbindungsleitung
- 76: Ventil
- 78: Raum
- 82: Ventil
- 84: Hydraulikpumpe
- 85: Verbindungsleitung
- 86: Verbindungsleitung
- 90: Hydraulikantriebseinheit
- 92: Kolbenelement
- 94: Hydraulikraum, Raumabschnitt
- 95: Kopplungseinrichtung
- 96: Raumabschnitt
- 98: Kolbenstange
- x: Richtung

## Patentansprüche

1. Vorrichtung (1) zum Expandieren von Kunststoffvorformlingen (10) zu Kunststoffbehältnissen mittels eines flüssigen Mediums mit wenigstens einer Umformungsstation (2), welche die Kunststoffvorformlinge mit dem flüssigen Medium befüllt und expandiert mit wenigstens einer Zuführeinrichtung (42, 44, 35), welche einer Einfülleinrichtung dieser Umformungsstation (2) das flüssige Medium zuführt, wobei diese Einfülleinrichtung (24, 25, 26) dazu geeignet und bestimmt ist, das flüssige Medium in die Kunststoffvorformlinge (10) einzufüllen, und wobei die Vorrichtung eine Druckerzeugungseinrichtung (4) aufweist, welche der Einfülleinrichtung (24, 25, 26) das flüssige Medium unter Druck zuführt, wobei die Druckerzeugungseinrichtung (4) wenigstens zwei Druckerzeugungseinheiten (42, 44) aufweist, welche dazu geeignet und bestimmt sind, der Einfülleinrichtung (24, 25, 26) das flüssige Medium unter Druck bereit zu stellen, **dadurch gekennzeichnet, dass** die Druckerzeugungseinheiten (42, 44) jeweils Antriebseinrichtungen (6) aufweisen, die unabhängig voneinander steuerbar sind.

2. Vorrichtung (1) nach Anspruch 1,
**dadurch gekennzeichnet, dass**
die beiden Druckerzeugungseinheiten (42, 44) derart parallel geschaltet sind, dass sie der Einfülleinrichtung jeweils das flüssige Medium zuführen.

3. Vorrichtung (1) nach wenigstens einem der vorangegangenen Ansprüche,
**dadurch gekennzeichnet, dass**
beide Druckerzeugungseinheiten (42, 44) jeweils über Flüssigkeitsleitungen (35) mit der Einfülleinrichtung (24, 25, 26) verbunden sind.

4. Vorrichtung (1) nach wenigstens einem der vorangegangenen Ansprüche,
**dadurch gekennzeichnet, dass**
die Einfülleinrichtung einen Sammelraum zur Aufnahme des flüssigen Mediums aufweist und dieser Sammelraum wenigstens zeitweise mit jeder der Druckerzeugungseinheiten (42, 44) in Strömungsverbindung steht.

5. Vorrichtung (1) nach wenigstens einem der vorangegangenen Ansprüche,
**dadurch gekennzeichnet, dass**
die Druckerzeugungseinheiten (42, 44) jeweils einen Flüssigkeitsraum (47) und eine gegenüber diesem Flüssigkeitsraum bewegbare Kolbeneinrichtung (43) aufweisen.

6. Vorrichtung (1) nach wenigstens einem der vorangegangenen Ansprüche,
**dadurch gekennzeichnet, dass**
wenigstens eine Druckerzeugungseinheit (42, 44) eine Pumpeneinrichtung ist und insbesondere eine Pumpeneinrichtung, welche aus einer Gruppe von Pumpeneinrichtungen ausgewählt ist, welche hydraulische Pumpen, Sinuspumpen, Axialkolbenpumpen, Blasebalgpumpen, Membranpumpen, Scrollpumpen, Rotationskolbenpumpen, Exzenterschneckenpumpen, Förderschnecken, Impellerpumpen, Kettenpumpen, Ringkolbenpumpen, Schlauchpumpen, Schraubenspindelpumpen, Schüttelpumpen, Zahnriemenpumpen und dergleichen enthält.

7. Vorrichtung (1) nach wenigstens einem der vorangegangenen Ansprüche,
**dadurch gekennzeichnet, dass**
die Einfülleinrichtung (24, 25, 26) ein Verschließelement (24) aufweist, welches in wenigstens einer Stellung einen Zufluss der Flüssigkeit in das Behältnis sperrt und in wenigstens einer Stellung diesen Zufluss zulässt.

8. Vorrichtung (1) nach wenigstens einem der vorangegangenen Ansprüche,
**dadurch gekennzeichnet, dass**
die Druckerzeugungseinrichtung einen Kniehebel aufweist.

9. Verfahren zum Expandieren von Kunststoffvorformlingen (10) zu Kunststoffbehältnissen mittels eines flüssigen Mediums mit wenigstens einer Umformungsstation (2), welche die Kunststoffvorformlinge mit dem flüssigen Medium befüllt und expandiert wobei mit wenigstens einer Zuführeinrichtung einer Einfülleinrichtung der Umformungsstation (2) das flüssige Medium zugeführt wird, wobei die Einfülleinrichtung das flüssige Medium in die Kunststoffvorformlinge (10) einfüllt, und wobei eine Druckerzeugungseinrichtung der Umformungsstation das flüssige Medium unter Druck zuführt, wobei
die Druckerzeugungseinrichtung (4) wenigstens zwei Druckerzeugungseinheiten (42, 44) aufweist, welche der Umformungsstation das flüssige Medium unter Druck bereitstellen, **dadurch gekennzeichnet, dass**
die Druckerzeugungseinheiten (42, 44) jeweils Antriebseinrichtungen (6) aufweisen, die unabhängig voneinander steuerbar sind.

## Claims

1. An apparatus (1) for expanding plastic preforms (2) into plastic containers using a liquid medium having at least one forming station (2) that fills and expands the plastic preforms using the liquid medium using at least one supply device (42, 44, 35) that supplies the liquid medium to a filling device of this forming station (2), wherein said filling device (24, 25, 26) is suitable and destined to fill the liquid medium into the plastic preforms (10), and wherein the apparatus has a pressure generation device (4) that supplies the liquid medium under pressure to the filling device (24, 25, 26), wherein the pressure generation device (4) has at least two pressure generation units (42, 44) suitable and designed to provide the liquid medium under pressure to the filling device (24, 25, 26), **characterised in that**
the pressure generation units (42, 44) each have drive devices (6) that can be controlled independently of each other.

2. The apparatus (1) as claimed in claim 1,
**characterised in that**
the two pressure generation units (42, 44) are connected in parallel in such a way that they each supply the liquid medium to the filling device.

3. The apparatus (1) as claimed in at least one of the preceding claims,
**characterised in that**
the two pressure generation units (42, 44) are each connected to the filling device (24, 25, 26) via liquid lines (35).

4. The apparatus (1) as claimed in at least one of the preceding claims,
**characterised in that**
the filling device has a collection space for receiving the liquid medium, which collection space is in fluid communication, at least temporarily, with each of the pressure generation units (42, 44).

5. The apparatus (1) as claimed in at least one of the preceding claims,
**characterised in that**
the pressure generation units (42, 44) each have a liquid chamber (47) and a piston unit (43) that can be moved relative to this liquid chamber.

6. The apparatus (1) as claimed in at least one of the preceding claims,
**characterised in that**
at least one pressure generation unit (42, 44) is a pump unit and in particular a pump unit that is selected from a group of pump units consisting of hydraulic pumps, sinus pumps, axial piston pumps, bellows pumps, diaphragm pumps, scroll pumps, rotary piston pumps, eccentric screw pumps, screw conveyors, impeller pumps, chain pumps, annular piston pumps, hose pumps, screw spindle pumps, shake pumps, tooth belt pumps and the like.

7. The apparatus (1) as claimed in at least one of the preceding claims,
**characterised in that**
the filling device (24, 25, 26) comprises a closure element (24) that blocks the flow of the liquid into the container in at least one position and allows this flow in at least one position.

8. The apparatus (1) as claimed in at least one of the preceding claims,
**characterised in that**
the pressure generation device has a toggle lever.

9. A method for expanding plastic preforms (10) into plastic containers by means of a liquid medium using at least one forming station (2) that fills and expands the plastic preforms using the liquid medium, wherein the liquid medium is supplied to a filling device of the forming station (2) using at least one supply device, wherein the filling device fills the liquid medium into the plastic preforms (10) and wherein a pressure generation device of the forming station supplies the liquid medium under pressure, wherein the pressure generation device (4) has at least two pressure generation units (42, 44) that provide the liquid medium under pressure to the forming station,
**characterised in that**
the pressure generation units (42, 44) each have drive devices (6) that can be controlled independently of each other.

## Revendications

1. Dispositif (1) destiné à dilater des préformes en plastique (10) pour en faire des récipients en plastique au moyen d'un milieu fluide avec au moins une station de formage (2), laquelle remplit et dilate les préformes en plastique avec le milieu fluide avec au moins un équipement d'amenée (42, 44, 35), lequel amène le milieu fluide à un équipement de remplissage de cette station de formage (2), dans lequel cet équipement de remplissage (24, 25, 26) est conçu et déterminé pour verser le milieu fluide dans les préformes en plastique (10), et dans lequel le dispositif présente un équipement de production de pression (4), lequel amène le milieu fluide sous pression à l'équipement de remplissage (24, 25, 26), dans lequel l'équipement de production de pression (4) présente au moins deux unités de production de pression (42, 44), lesquelles sont conçues et déterminées pour fournir le milieu fluide sous pression à l'équipement de remplissage (24, 25, 26),
**caractérisé en ce que**
les unités de production de pression (42, 44) présentent respectivement des équipements d'entraînement (6) qui peuvent être commandés indépendamment les uns des autres.

2. Dispositif (1) selon la revendication 1,
**caractérisé en ce que**
les deux unités de production de pression (42, 44) sont montées en parallèle de telle sorte qu'elles amènent respectivement le milieu fluide à l'équipement de remplissage.

3. Dispositif (1) selon au moins l'une des revendications précédentes,
**caractérisé en ce que**
les deux unités de production de pression (42, 44) sont respectivement reliées à l'équipement de remplissage (24, 25, 26) via des conduites de fluide (35).

4. Dispositif (1) selon au moins l'une des revendications précédentes,
**caractérisé en ce que**
l'équipement de remplissage présente une chambre collectrice pour loger le milieu fluide et cette chambre collectrice est au moins temporairement en communication d'écoulement avec chacune des unités de production de pression (42, 44).

5. Dispositif (1) selon au moins l'une des revendications précédentes,
**caractérisé en ce que**
les unités de production de pression (42, 44) présentent respectivement une chambre de fluide (47) et un équipement de piston (43) mobile par rapport à cette chambre de fluide.

6. Dispositif (1) selon au moins l'une des revendications précédentes,
**caractérisé en ce que**
au moins une unité de production de pression (42, 44) est un équipement de pompe et en particulier un équipement de pompe, lequel est sélectionné dans un groupe d'équipements de pompe, lequel contient des pompes hydrauliques, des pompes sinusoïdales, des pompes à pistons axiaux, des pompes à soufflet, des pompes à membrane, des pompes à spirale, des pompes à pistons rotatifs, des pompes à vis excentrée, des vis sans fin, des pompes à turbine, des pompes à chaîne, des pompes à pistons annulaires, des pompes péristaltiques, des pompes à tige filetée, des pompes à secouer, des pompes à courroie crantée et analogues.

7. Dispositif (1) selon au moins l'une des revendications précédentes,
**caractérisé en ce que**
l'équipement de remplissage (24, 25, 26) présente un élément de fermeture (24), lequel dans au moins une position bloque un afflux du fluide jusque dans le récipient et dans au moins une position autorise cet afflux.

8. Dispositif (1) selon au moins l'une des revendications précédentes,
**caractérisé en ce que**
l'équipement de production de pression présente un levier coudé.

9. Procédé destiné à dilater des préformes en plastique (10) pour en faire des récipients en plastique au moyen d'un milieu fluide avec au moins une station de formage (2), laquelle remplit et dilate les préformes en plastique avec le milieu fluide, dans lequel avec au moins un équipement d'amenée le milieu fluide est amené à un équipement de remplissage de la station de formage (2), dans lequel l'équipement de remplissage verse le milieu fluide dans les préformes en plastique (10), et dans lequel un équipement de production de pression de la station de formage amène le milieu fluide sous pression, dans lequel l'équipement de production de pression (4) présente au moins deux unités de production de pression (42, 44), lesquelles fournissent le milieu fluide sous pression à la station de formage,
**caractérisé en ce que**
les unités de production de pression (42, 44) présentent respectivement des équipements d'entraînement (6) qui peuvent être commandés indépendamment les uns des autres.
